# EUROPEAN PATENT APPLICATION

(11) **EP 1 384 501 A2**
(43) Date of publication of application: **28.01.2004**
(21) Application number: 02025077.5
(22) Date of filing: 12.11.2002
(51) Int. Cl.: B01D 17/04, B01D 17/00, B01D 17/025

(54) **Oli-water separator for bilge containing fine suspended substances**

(30) Priority: 24.07.2002 JP 2002214879
(71) Applicant: TAIKO KIKAI INDUSTRIES CO., LTD., Kumage-gun, Yamaguchi, 742-1511 (JP)
(72) Inventor: Miyazawa, Kazuki, Taiko Kikai Ind. Co., Ltd., Kumage-gun, Yamaguchi 742-1511 (JP); Takeuchi, Kentaro, Taiko Kikai Ind. Co., Ltd., Kumage-gun, Yamaguchi 742-1511 (JP)
(74) Representative: Reinhard - Skuhra - Weise & Partner

(57) **Abstract**

For treating bilge containing solid matters and emulsion securely, an oily water separator includes a first treater 1 for separating oil ingredient roughly from bilge by gravity separation and removing fine suspended matter from the bilge by sand filtering, and a second treater 10 for separating and removing oil ingredient remained in the bilge treated by the first treater. The first and second treaters 1, 10 are connected directly by a feeding pipe 8. The first treater 1 includes an oil discharge portion 5a above an oily water inlet 2 and a filtering sand layer 3 below the oily water inlet 2. The second treater 10 includes a coalescer 19 in a lower room 29 to communicate with the upper room.

## Description

### BACKGROUND OF THE INVENTION

### Field of the Invention

This invention relates to an oil-water separator, for bilge containing fine suspended substances, which can treat securely bilge (soil water) containing a solid material, such as finesand or mud, and an ingredient of oil, such as an emulsion chemically stable to be divided finely by a surfactant, to be generated in an engine room of a marine structure navigating in a soil water area (a river, a lake or a canal).

### Description of the Related Art

Generally, a gravity separation type or a coalescer type or an absorption type oil-water separator is mainly used in a marine structure.

A gravity separation type separator collects oil to be floated at an upside of a separating tank by deference of specific gravity between water and oil while flowing bilge through a plurality of separating plates. A coalescer type separator collects oil to be coarser grains by granulating fine oil grains with a wire mesh form coalescer (coarse-graining material) for floating easily in a separating tank. An - absorption type separator collects oil in bilge to be absorbed with an absorbent or a filter.

### Objects to be solved

However, in a marine structure navigating in a mud water area, water in the navigating area includes fine sand and mud so that bilge in an engine room contains a lot of solid materials such as this fine sand and mud. If treating the bilge by usual oil-water separators, the fine solid materials may deteriorate performance of gravity separation, or clog a coalescer or an absorbent and then performance of separating or removing oil is deteriorated. Therefore, the bilge may not be treated to make oil density of the treated water in the oil-water separator under a quality standard value of wasted water.

An emulsion being mixed in bilge, containing a chemically stable ingredient of oil to be divided finely by a surfactant, is hardly separated and removed by a usual marine oil-water separator so that the bilge may not be treated to make oil density of the treated water in the oil-water separator under a waste water quality standard value.

To overcome the above drawback of prior art, one object of this invention is to provide an oil-water separator, for bilge containing fine suspended substances, which can treat securely the bilge containing fine suspended substances, such as an emulsion including sand, mud and ingredients of oil to be hardly treated by a usual oil-water separator.

### SUMMARY OF THE INVENTION

### How to attain the object

In order to attain the objects, an oil-water separator for bilge containing fine suspended substances, according to this invention, includes a first treater for separating roughly ingredients of oil from the bilge by gravity separation and removing fine suspended substances, such as sand and mud, by sand filtering, and a second treater for separating and removing ingredients of oil in the bilge being treated by the first treater.

According to the above structure, the first treater at beginning step separates roughly ingredients of oil by gravity separation and removes fine suspended materials by sand filtering. Specifically, bilge supplied into the first treater flows in laminar flow, in which respective materials flow in parallel to be in layers by slow moving, so that coarse-grained ingredients of oil in the bilge is floated according to Stokes' law and separated. Separated ingredients of oil are gathered at a top of the first treater and discharged to outside. The bilge in which coarse-grained ingredients of oil are removed by gravity separation flows downward in laminar flow and fine suspended materials are filtered with sand filtering.

Advantageously, in the oil-water separator mentioned above, the first treater and the second treater are connected directly with a feeding pipe.

According to the above structure, bilge is supplied directly from the first treater to the second treater so that the structure is simplified comparing with a separator, having a reserving tank between the first and the second treaters, which requires a feed pump for feeding bilge from the reserving tank to the second treater.

Advantageously, in the oil-water separator mentioned above, the first treater includes an oil discharge portion above an oily water inlet and a filtering sand layer below the oily water inlet.

According to the above structure, bilge supplied into the first treater flows in laminar flow so that coarse-grained ingredients of oil in the bilge are floated according to Stokes' law and separated. Separated ingredients of oil are gathered at a top of the first treater and discharged to outside. The bilge in which coarse-grained ingredients of oil are removed by gravity separation flows downward in laminar flow and fine suspended materials are filtered with sand filtering. Fine ingredients of oil stayed in the filtering sand layer are combined mutually in the filtering sand layer to grow up to coarse-grained ingredients of oil and then the coarse-grained ingredients of oil float from the filtering sand layer to be gathered as separated oil at the top of the separator.

Advantageously, in the oil-water separator mentioned above, the filtering sand layer for sand filtering is provided with a plurality of layers which are made of respective sands with deferent grain size and deferent specific gravity.

According to the above structure, when sand with coarser grain or larger specific gravity is used in proportion to lower layer, flowage of small grain sand at upper layers can be prevented. When sand with finer grain and larger specific gravity is used in proportion to lower layer, ingredients of oil can be removed gradually. When sand with gradually finer grain (larger specific gravity) is used from the top layer to the middle layer and sand with gradually coarser grain (larger specific gravity) is used from the middle layer to the bottom layer, the effects of the both layer structures mentioned above can be performed simultaneously.

Advantageously, in the oil-water separator mentioned above, the first treater is provided with a cleaning valve underneath the filtering sand layer and a oily water inlet above the filtering sand layer for cleaning the filtering sand layer to feed cleaning water through the cleaning valve and to discharge the cleaning water from the oily water inlet.

According to the above structure, filtered fine solid materials are stored in the filtering sand layer for longtime use of the separator, and when flow resistance of the filtering sand layer is increased by stored solid materials, to stop supplying bilge and to feed cleaning water through the cleaning valve into the first treater for supplying water flow oppositely to usual flow in the filtering sand layer, fine solid materials and ingredients of oil stored in the filtering sand layer are discharged from the oily water inlet to outside. The filtering sand layer can be used permanently by this cleaning operation. This structure is effective for oil-water separating method for bilge containing fine suspended substances.

Advantageously, in the oil-water separator mentioned above, the second treater is provided with an oily water inlet mounted at an upper room and that an oil discharge portion at a top area of the upper room; a coalescer mounted in a lower room in communication with the upper room, and an oil discharge portion at a top of the lower room.

According to the above structure, the bilge (oily water) fed from the first treater is separated to oil and water by gravity separation and a coalescer in the second treater to make oil density of the treated water under a waste water quality standard value. Specifically, the bilge in the upper room of the second treater is treated by gravity separation similarly as the first treater to make effluent coarse-grained ingredients of oil from the first treater floated and separated. Separated oil gathered at the top of the upper room is discharged through the oil discharge portion to outside. The bilge containing fine ingredients of oil, which can not be treated in the upper room, is fed into the coalescer. By flowing the bilge through the coalescer, fine-grained ingredients of oil in the bilge are caught and combined in the coalescer to be coarse-grained ingredients of oil so that the ingredients of oil can float at a higher speed to be separated and are discharged through the oil discharge portion of the lower room to outside. The bilge (oily water) herein means a mixture including mainly oil and water after being treated in the first treater.

Advantageously, in the oil-water separator mentioned above, the second treater is provided with a vertical partition plate facing to the oily water inlet, a sludge outlet in the vicinity of the bottom side of the vertical partition plate, and a connecting pipe at an opposite side of the oily water inlet over the vertical partition plate to communicate with the coalescer through a filtering device.

According to the above structure, the bilge fed into the second treater flows upward over the top of the vertical partition plate, and contained materials, in the bilge, with large specific gravity, such as filtering sand, are separately precipitated at the bottom area of the vertical partition plate and discharged through the sludge outlet to outside. Coarse-grained ingredients of oil float at higher speed by upward flow to the top area of the upper room to be separated. The bilge removed coarse-grained ingredients of oil and sold materials flows downward from the top of the vertical partition plate, and after passing through the connecting pipe to be removed fine sold material by the filtering device, is fed into the coalescer.

The above and other objects and features of this invention will become more apparent from the following description taken in conjunction with the accompanying drawings.

### BRIEF DESCRIPTION OF THE DRAWINGS

Fig. 1 is a vertical sectional view of the first embodiment of an oil-water separator according to this invention;
Fig. 2 is a piping diagram, showing a layout of respective treaters of the oil-water separator according to this invention;
Fig. 3 is a piping diagram of the second embodiment of an oil-water separator according to this invention;
Fig. 4 is a piping diagram of the third embodiment of an oil-water separator according to this invention; and
Fig. 5 is a piping diagram of the forth embodiment of an oil-water separator according to this invention.

### DESCRIPTION OF THE PREFERRED EMBODIMENT

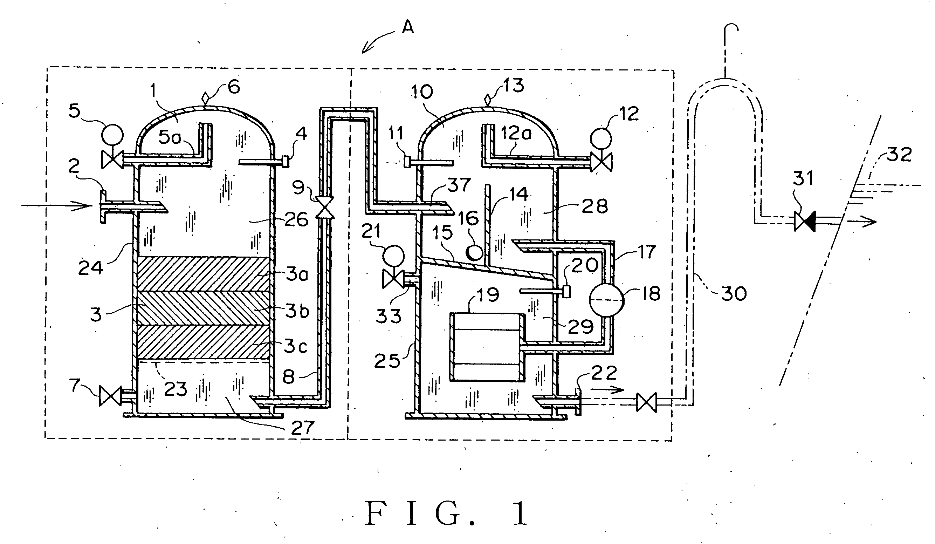

An embodiment according to this invention will now be described with reference to figures . Fig. 1 shows one embodiment of an oil-water separator according to this invention.

In Fig. 1, marking 1 is a first treater (separator) of an oil-water separator A and a filtering sand layer 3 is provided at a lower portion'of the first treater 1. Marking 10 is a second treater (separator), of the oil-water separator A, connected with the first treater 1 by means of a feeding pipe 8.

A coalescer 19 (coarse-graining material) is provided at a lower portion of the second treater 10. The feeding pipe 8 connects a bottom portion of a tank 24 of the first treater 1 and the vertically middle portion of a tank 25 of the second treater 10 . The maximum height of the feeding pipe 8 is slightly larger than the height of the first treater 1.

Before operating, clean water is filled previously in the first treater 1 and the second treater 10. When filling clean water, air in the first and second treaters 1, 10 is exhausted automatically to outside by air vent valves 6, 13. Entrained air during operation is also exhausted automatically by the air vent valves 6, 13.

Bilge (soil water), supplied to an oily water inlet 2 by a pump or the like, flows downward in laminar flow in an upper room of the first treater 1. Coarse-grained ingredients of oil, which have faster floating speed than the downward flow speed depending on deference of specific gravity between oil and water and gain sizes of ingredients of oil, are floated according to Stokes' law and separated and gathered as separated oil at a top of the first treater 1. The bilge (soil water) means untreated bilge containing solid materials, such as sand and mud, and ingredients of oil, such as an emulsion.

An oil level sensor 4 is mounted at one side of top area of the first treater 1, in which the separated oil is gathered, to sense the oil level of the oil gathered at the top of the first treater. An L-shape oil discharge pipe (oil discharge portion) 5a, connected with an oil discharge valve 5 is mounted at the other side of top area of the first treater 1. When the oil level of the oil gathered at a top of the first treater 1 reaches to a predetermined level, the oil discharge valve 5 is opened automatically by a signal of the oil level sensor 4 and the separated oil is discharged through the oil discharge pipe 5a to outside of the first treater 1 to be fed to a separated oil tank (not shown). After completing to discharge separated oil, the oil discharge valve 5 is automatically closed. Oil discharge means is structured by the oil discharge pipe 5a, the oil discharge valve 5 and the oil level sensor 4.

The bilge removed coarse-grained ingredients of oil at upper area of the first treater 1 flows in laminar flow into the filtering sand layer 3 provided at lower portion of the first treater 1. The filtering sand layer 3 is structured by a net 23 at the bottom for preventing outflow of filter sand and, for example, three kinds of sand; relatively small grain filter sand for the top layer 3a and the middle layer 3b, and relatively large grain filter sand for the bottom layer 3c to support filter sand of upper layers and prevent outflow thereof. Grain size of the filter sand at the top layer 3a is preferably smaller than that of the middle layer 3b to prevent outflow of the filter sand. Not limited three kinds of grain size of filter sand, one grain size, two grain sizes, four grain sizes or more grain sizes can be used. A small room 27 is provided between the bottom of the filtering sand layer 3 and the bottom wall of the tank 24.

Fine suspended substance contained in the bilge, flowing into the filtering sand layer 3, is filtered by the filtering sand layer 3. The filtered bilge flows into the feeding pipe 8 mounted at one side of bottom area of the first treater 1 and is fed to the second treater 10 through a gate valve 9 provided in the middle of the feeding pipe 8.

Fine ingredients of oil, filtered and stayed in the filtering sand layer 3, are combined mutually in the filtering sand layer 3 to grow up to coarse-grained ingredients of oil and then the coarse-grained ingredients of oil float from the filtering sand layer 3. Floating coarse-grained ingredients of oil are gathered as separated oil at the top of the first treater 1.

Filtered fine solid materials are stored in the filtering sand layer 3, and when flow resistance of the filtering sand layer 3 is increased by stored solid materials, to stop supplying bilge and close the gate valve 9 provided in the middle of the feeding pipe 8 and open a cleaning valve 7 provided at the one side of bottom area of the first treater 1 for feeding cleaning water into the tank 24 from the bottom of the first treater 1 and for supplying water flow oppositely to usual flow in the filtering sand layer 3, fine solid materials and ingredients of oil stored in the filtering sand layer 3 can be discharged from the oily water inlet 2 to outside and gathered. The filtering sand layer 3 can be used permanently by this cleaning operation.

The bilge, which is treated in the first treater 1 and fed into the second treater 10 through the feeding pipe 8 and the gate valve 9, contains slightly outflow of fine solid materials and filter sand, fine ingredients of oil remained by filtering, and ingredients of oil stored at the bottom of the filtering sand layer 3.

The bilge, flowing into the second treater 10 through the oily water inlet (bilge supply portion) 37 at an edge of the feeding pipe 8, firstly flows upward over the top of a vertical partition plate 14. At the time, contained materials, in the bilge, with large specific gravity are separately precipitated at the bottom area of the vertical partition plate 14, and discharged opportunely through a sludge outlet 16 provided at the bottom area of the vertical partition plate 14 to outside of the treater to be fed to a sludge tank (not shown) . The bottom portion of the vertical partition plate 14 intersects a slightly inclined horizontal partition plate 14 at the almost widthwise center of the tank 25. The sludge outlet 16 is located in the vicinity of the intersecting portion.

Coarse-grained ingredients of oil contained in the bilge float at enlarged speed by upward flow to the top area of the second treater 10 to be separated. An oil level sensor 11 is mounted at one side of the upper portion of the second treater 10 in which separated oil is gathered to sense the oil level of the oil gathered at the top area of the second treater 10. An L-shape oil discharge pipe (oil discharge portion) 12a, connected with an oil discharge valve 12 is mounted at the other side of top area of the second treater 10. When the oil level of the oil gathered at a top of the second treater 10 reaches to a predetermined level, the oil discharge valve 12 is opened automatically by a signal of the oil level sensor 11 and the separated oil is discharged through the oil discharge pipe 12a to outside of the second treater 10 to be fed to a separated oil tank (not shown). After completing to discharge separated oil, the oil discharge valve 12 is automatically closed. Oil discharge means is structured by the oil discharge pipe 12a, the oil discharge valve 12 and the oil level sensor 11.

The bilge removed coarse-grained ingredients of oil and sold materials flows over the vertical partition plate 14 and downward from the top of the vertical partition plate 14. After passing through a connecting pipe 17 to be removed fine sold material by the filtering device 18, is fed into the coalescer 19. The connecting pipe 17 connects an upper room 28 and the coalescer 19 in a lower room 29, partitioned by horizontal partition plate 15.

Passing bilge through the coalescer 19, fine ingredients of oil in the bilge are caught in the coalescer 19 so that the oil density of the treated water is made under a waste water quality standard value. The bilge is discharged from a treated water outlet 22, provided at one side of the lower portion of the second treater 10, to outboard 23 through a check valve 31 and a discharge pipe 30 standing to maintain inner pressure of the second treater 10. The maximum height of the discharge pipe 30 is larger than that of the second treater 10 or water surface of the outboard 32.

Fine-grained ingredients of oil caught in the coalescer 19 are combined to be coarse-grained ingredients of oil so that the ingredients of oil can float at a higher speed to the bottom surface of the horizontal partition plate 15 and be separated. Oil level of the separated oil, gathered under the horizontal partition plate 15, is sensed by a oil level sensor 20 mounted at one side of the second treater 10 (tank wall of lower side of the inclined horizontal partition plate 15). When the oil level reaches a predetermined level, a oil discharge valve 21, mounted at the other side of the second treater 10 (tank wall of higher side of the inclined horizontal partition plate 15), is opened automatically by a signal of the oil level sensor 20, and the separated oil is discharged through an oil discharge pipe 33 (oil discharge portion) to outside of the second treater 10 to be fed to a separated oil tank (not shown) . Oil discharge means is structured by the oil discharge pipe 33, the oil discharge valve 21 and the oil level sensor 20.

Thus, applying sand filtering of the first treater 1 as preliminary treatment, fine suspended material is removed in advance for reducing load in the second treater 10 as secondary step (post treatment). And harmful effects by suspended materials can be prevented so that performance of oil-water separation in the oil-water separator can be maintained stably.

The second treater 10, mentioned above, is a type approval oil-water separator under the international standard specified in IMO (International Maritime Organization).

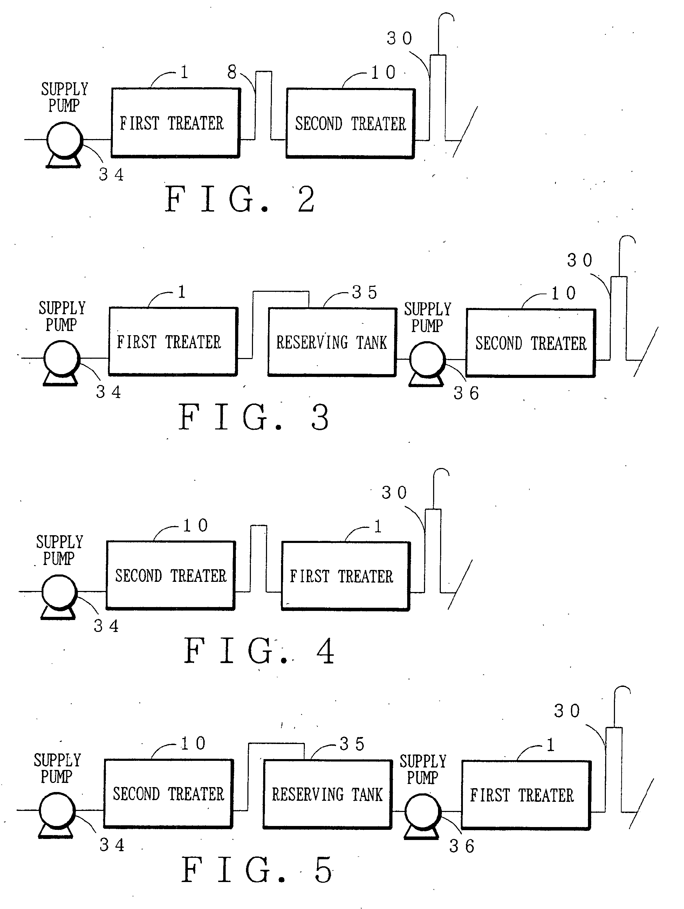

Fig. 2-5 show embodiments of an oil-water separator, which have various layouts of respective treaters, according to this invention.

Fig. 2 is a piping diagram to show the structure in Fig. 1 which is arranged with pipe connection to feed bilge from a sand filtering apparatus as the first treater 1 to a type-approval oil-water separator as the second treater 10. Marking 34 is a supply pump, marking 8 is a feeding pipe, and marking 30 is a discharging pipe.

Fig. 3 shows a structure which is arranged with pipe connection to store temporarily treated water by a sand filtering apparatus as the first treater 1 in a reserving tank 35 and feed the treated water from the reserving tank 35 to a type-approval oil-water separator as the second treater 10. In this structure, two supply pumps 34, 36, one of which is before the first treater 1 and the other of which is between the reserving tank 35 and the second treater 10, are required so that the operation is complicated relatively with the embodiment in Fig. 2.

Fig. 4 shows a structure which is arranged with pipe connection to feed bilge from a type-approval oil-water separator as the second treater 10 to a sand filtering apparatus as the first treater 1. In this structure, fine solid materials will be stored in the filter device 18 and the coalescer 19 (see Fig. 1) so that frequent maintenance is required.

Fig. 5 shows a structure which is arranged with pipe connection to store temporarily treated water by a type-approval oil-water separator as the second treater 10 in a reserving tank 35 and feed the treated water from the reserving tank 35 to a sand filtering apparatus as the first treater 1. In this structure, two supply pumps 34, 36, one of which is before the second treater 10 and the other of which is between the reserving tank 35 and the first treater 1, are required, and fine solid materials will be stored in the filter device 18 and the coalescer 19 (see Fig. 1) so that frequent maintenance is required.

Thus, the layout of respective treaters, shown in Fig. 1, 2, is recognized for the best separator.

While the forms of the invention herein disclosed constitute presently preferred embodiments, many others are possible. It is not intended herein to mention all the possible embodiments of the invention which will be apparent to those skilled in the art. It is understood that the term used herein are merely descriptive rather than limiting, in that various changes may be made without departing from the spirit or scope of this invention as defined by the following claims.

## Claims

1. An oil-water separator for bilge containing fine suspended substances comprising:
a first treater for separating roughly ingredients of oil from the bilge by gravity separation and removing fine suspended materials, such as sand and mud, by sand filtering; and
a second treater for separating and removing ingredients of oil in the bilge being treated by the first treater.

2. The oil-water separator for bilge containing fine suspended substances according to claim 1, further comprising a feeding pipe for directly connecting the first treater and the second treater.

3. The oil-water separator for bilge containing fine suspended substances according to claim 1 or 2, wherein the first treater includes an oil discharge portion above an oily water inlet and a filtering sand layer below the oily water inlet.

4. The oil-water separator for bilge containing fine suspended substances according to claim 1, 2 or 3, wherein the filtering sand layer for sand filtering includes a plurality of layers which are made of respective sands with deferent grain size and deferent specific gravity.

5. The. oil-water separator for bilge containing fine suspended substances according to claim 1, 2, 3 or 4, wherein the first treater has a cleaning valve underneath the filtering sand layer and a oily water inlet above the filtering sand layer for cleaning the filtering sand layer to feed cleaning water through the cleaning valve and to discharge the cleaning water from the oily water inlet.

6. The oil-water separator for bilge containing fine suspended substances according to claim 1, 2, 3, 4 or 5, wherein the second treater includes an oily water inlet mounted at an upper room and that an oil discharge portion at a top area of the upper room, a coalescer mounted in a lower room in communication with the upper room, and an oil discharge portion at a top of the lower room.

7. The oil-water separator for bilge containing fine suspended substances according to claim 6, wherein the second treater includes a vertical partition plate facing to the oily water inlet, a sludge outlet in the vicinity of the bottom side of the vertical partition plate, and a connecting pipe at an opposite side of the oily water inlet over the vertical partition plate to communicate with the coalescer through a filtering device.
